# EUROPEAN PATENT APPLICATION

(11) **EP 4 464 637 A1**
(43) Date of publication of application: **20.11.2024**
(21) Application number: 23174233.9
(22) Date of filing: 19.05.2023
(51) Int. Cl.: B65H 75/44, A01G 25/00

(54) **HOSE BOX ASSEMBLY**

(71) Applicant: Husqvarna AB, 561 82 Huskvarna (SE)
(72) Inventor: Schenk, Christoph, 89610 Oberdischingen (DE); Schlegel, Tobias, 89171 Illerkirchberg (DE); Krauß, Stefan, 88074 Meckenbeuren (DE)
(74) Representative: Finkele, Rolf

(57) **Abstract**

A hose box assembly (100) comprises a housing (102), a hose reel (126), and a cover (114). The cover (114) is rotatable between an operational position and a storage position. In the storage position, the cover (114) inhibits an access to an inside (116) of the housing (102). In the operational position, the inside (116) of the housing (102) is accessible. The hose box assembly (100) is characterized in that a frame (146) is movably mounted to the housing (102) such that a hose guidance device (142) is movable relative to the housing (102) during a movement of the cover (114) between the operational position and the storage position. The frame (146) is coupled to the cover (114) such that when the cover (114) is in the operational position, a hose guide (144) is positioned above an upper edge (118) of the housing (102) such that the hose guide (144) is accessible. In the storage position and in the operational position, the hose reel (126) is positioned in the inside (116) of the housing (102).

## Description

### TECHNICAL FIELD

The present disclosure relates to a hose box assembly, particularly an underground hose box assembly. More specifically, the present disclosure relates to the underground hose box assembly compatible with an autonomous lawn mower.

### BACKGROUND

Underground hose boxes are used to store a hose in a garden or lawn area beneath the ground. Typically, such underground hose boxes house a hose reel which is used to wind and store a hose therein. An underground water connection is coupled with the hose box. A user may manually retrieve the hose as per application requirements and fulfil the watering requirements accordingly. After using the hose, the hose may again be wrapped or stored with the hose reel.

With new technological advancements, gardening and associated activities are getting more and more dependent on autonomous machinery. For example, autonomous lawn mowers are being used quite extensively in carrying out various gardening related tasks. A user may easily control and execute various gardening tasks from the comforts of his/her home or office.

One such example of an underground hose box available on the market comprises a box in which a hose reel is included, and which comprises a lid. The lid is fixed to the box by a plurality of screws. Further, a sprayer mounted to the hose is located above the lid in a storage position. Therefore, the lid comprises an outlet opening for the hose, wherein the outlet opening extends above a main surface of the lid in an angular manner. When not in use, the sprayer rests on the lid. However, such an underground hose box is not compatible with the autonomous lawn mowers or similar gardening equipment.

### SUMMARY OF THE INVENTION

In view of the above, it is an objective of the present invention to solve or at least reduce the drawbacks discussed above. The objective is at least partially achieved by a hose box assembly.

According to an aspect of the present invention, a hose box assembly is provided. The hose box assembly includes a housing, and a hose reel removably mounted to the housing such that a hose is storable on the hose reel inside the housing. The hose box assembly includes a cover hinged to the housing. The hose box assembly includes a hose guidance device which guides the hose during winding or unwinding of the hose to the hose reel. The hose guidance device comprises a hose guide and a frame. The cover is configured to be rotatable between an operational position and a storage position. In the storage position, the hose reel and the hose guidance device are positioned inside the housing, and the cover inhibits an access to an inside of the housing. In the operational position, the inside of the housing is accessible. The hose box assembly is characterized in that the frame is movably mounted to the housing such that the hose guidance device is movable relative to the housing during a movement of the cover between the operational position and the storage position. Further, the frame is coupled to the cover such that when the cover is in the operational position, the hose guide is positioned above an upper edge of the housing such that the hose guide is accessible. Furthermore, in the storage position and in the operational position, the hose reel is positioned inside of the housing.

The hose box assembly with the structural features as defined above allows efficient working with a robotic or an autonomous lawn mower. In the storage position, the hose box assembly exhibits a compact configuration. When the cover is closed, the robotic lawn mower may easily pass over the hose box assembly without any interference or entanglement with any parts. The hose box assembly safely and securely stores the hose inside the hose box assembly in the storage position. Advantageously, the hose is protected from dust, dirt, rain and any other environmental factors and the hose box assembly enhances durability and life of the hose. In the operational position, the hose box assembly provides an ergonomic, easy to use arrangement for a user to access the hose and use for various purposes. A user may have to apply lesser force in retrieving the hose from the hose box assembly compared to other storage means.

According to an exemplary embodiment of the invention, the housing is an underground housing, and/or the housing is configured to be positioned in an underground. Underground housing allows for compatibility of the hose box assembly for working with robotic or autonomous lawn mower as there is a compact flat surface when the cover of the hose box assembly is closed. Further, as the housing of the hose box assembly is closed, it also prevents any dust or dirt to enter the housing of the hose box assembly and keeps the contents inside safe.

According to an exemplary embodiment of the invention, the hose guidance device is configured to be linearly movable relative to the housing during a rotational movement of the cover between the operational position and the storage position. Linear movement of the hose guidance device allows for a user to apply lesser force in retrieving the hose from the hose box assembly. Also, linear movement provides safe retrieval of the hose from the hose box assembly as the user may clearly know the type and range of movement of various parts and act accordingly.

According to an exemplary embodiment of the invention, the frame comprises an upper end being positioned close to the cover and a lower end being positioned close to the bottom of the housing. The hose guide is mounted, in particular rotatably mounted, to the frame at the upper end of the frame. The upper end of the frame is typically positioned above the ground level when the hose box assembly is in use. As the user interacts with the hose box assembly by holding the hose near the hose guide, the mounting of the hose guide near the upper end ergonomically provides a user with easy pickup of the hose.

According to an exemplary embodiment of the invention, the housing includes two opposing lateral sides, a front side, a rear side and a bottom. Each of the two opposing lateral sides has a guiding indentation. The frame has two lateral sides. At each of the two lateral sides of the frame a housing guide element, in particular a housing guide pin, more in particular a spring-loaded housing guide pin, is provided. Each of the housing guide elements is guidably movable in a respective one of the guiding indentations. The guiding indentation is formed such that, in the operational position, the housing guide element is adjustable such that the hose guide is positioned above an upper edge of the housing. The guiding indentation is further formed such that, in the storage position, the housing guide element is positionable such that the hose guidance device, particularly the hose guide, is positioned inside the housing. In the storage position, the housing guide element being positionable according to the present application may denote that the housing guide element comprises a defined position within the guiding indentation, wherein the defined position allows easy closing of the cover. The housing guide element being adjustable according to the present invention may denote that the housing guide element is locked at least with respect to a downward direction. The housing guide elements advantageously make it possible for the hose guide to be safely and securely positioned respectively adjusted in two different positions corresponding to the operational position and the storage position of the hose box assembly. The guiding indentations provide a defined path for the housing guide elements to move while transitioning between the two positions.

According to an exemplary embodiment, the housing guide element according to the present invention may particularly be a spring-loaded guide pin. This spring-loaded guide pin may provide a reliable and easy to disassemble respectively easy to assemble connection of the house guidance device with respect to the housing.

According to an alternative embodiment of the present invention, the housing guide elements may be an axle mounted to a, particularly linear, groove or through-opening formed in the frame such that two opposite ends of the axle each provide one housing guide element. Thereby, cheap and easy to replace housing guide elements may be providable.

According to an exemplary embodiment of the invention, the frame has an upper end positioned close to the cover and a lower end positioned close to a bottom of the housing. The housing guide elements are each mounted near the lower end of the lateral sides. The housing guide elements help secure the frame with the housing in a simplified manner without the use of a large number of parts. As the space is limited inside the hose box assembly, the housing guide elements provide excellent means to couple the frame securely with the housing.

According to an exemplary embodiment of the invention, the frame comprises an upper end positioned close to the cover, a lower end positioned close to the bottom of the housing, and two lateral sides. The frame further has two cover guide elements, wherein each of the two cover guide elements is provided at the frame at one of the two lateral sides adjacent to the upper end. The cover has two guide grooves, particularly two linear guide grooves, which are configured such that each of the two cover guide elements is movable in one of the two guide grooves when the cover is rotational moved between the operational position and the storage position such that the hose guidance device is linearly movable relative to the housing. The cover guide elements move inside the respective linear guide grooves provided in the cover and facilitate the rotational motion of the cover while still being in contact with the frame. The cover is supported by the frame until the cover remains in contact with the frame.

According to an exemplary embodiment of the invention, the cover is removably hingeable to the housing by a hinge. The hinge is formed at the rear side of the housing and at a rear edge of the cover. The cover further includes a front edge opposite to the rear edge. Each of the guide grooves extends from the front edge of the cover towards the rear edge of the cover. Each of the guide grooves includes a front end positioned adjacent to the front edge of the cover. The cover is further configured to be disassembled, particularly toollessly disassembled, from the housing, in a maintenance position. The front end of the guide groove is formed such that, when the cover is rotated from the operational position towards the maintenance position, the cover guide element, particularly automatically, disengages from the guide groove. The front end of the guide groove is further formed such that, when the cover is rotated into the storage position, the cover guide element, particularly automatically, engages with the guide groove. Toolless disengagement allows a user to easily remove the cover to access the hose box assembly for cleaning and maintenance purposes. Further, toolless engagement allows the user to easily reassemble the cover and the hose box after maintenance or other operations during which the inside of the housing should be accessible. Hence, the user does not have to face any hassles and may easily clean and maintain the hose box assembly.

According to an exemplary embodiment of the invention, in the operational position, the cover and an opening of the housing form an angle of about 10° to 45°, in particular 15° to 30°, more in particular substantially 18°, therebetween. In the operational position, the angular ranges are enough for a user to retrieve the hose easily from the hose box assembly. Further, the angular range allows for an good positioning of the hose guide above the ground such that the hose may be winded respectively unwinded with minimum friction and therefore with minimum force respectively effort required from the user.

According to an exemplary embodiment of the invention, in the storage position, the cover and an opening of the housing form an angle of about 5° to 0°, in particular 3° to 0°, more in particular substantially 0°, therebetween. In the storage position, the cover is provided at angular ranges such as to prevent or limit access inside the hose box assembly. Further, the cover may advantageously be at the same level as the surrounding ground surface. Hence, e.g., a lawn mower may easily pass over the cover without interaction with the same.

According to an exemplary embodiment of the invention, the hose reel comprises an axle, two side walls, particularly two substantially circular shaped side walls, and two mounting structures. The two side walls are mounted to the axle such that the two side walls delimit a region of the hose reel where the hose is windable. Each of the two mounting structures is fixed to one of the two side walls. The two mounting structures are configured to toollessly mount the hose reel to the housing such that a relative position between the hose reel and the housing is temporarily fixed, in particular wherein each of the two mounting structures comprises two ribs, particularly two parallel ribs, which are configured to allow the mounting of the hose reel to the housing in solely one predefined position and orientation. The hose reel can be easily mounted by a user in a toolless manner during maintenance or for any other purposes. There is no need for any complex tools and procedures to assemble the hose reel. Also, repeatability and accuracy of the mounting of the hose reel within the housing is also maintained.

According to an exemplary embodiment of the invention, the cover is further configured to be rotatable in a maintenance position. The cover is further configured to be disassembled, particularly toollessly disassembled, from the housing, in the maintenance position. Further, in the maintenance position, the cover and an opening of the housing form an angle of about 60° to 100°, in particular 75° to 95°, more in particular substantially 90°, therebetween. Toolless assembly or disassembly allows the cover to be used easily as per application requirements by a user.

According to an exemplary embodiment of the invention, the hose guidance device is further configured to be disassembled, particularly toollessly disassembled, from the housing in the maintenance position, in particular by a linear movement relative to the housing. Further, the hose reel is configured to be disassembled, in particular toollessly disassembled, from the housing in the maintenance position, particularly by a linear movement relative to the housing. Toolless assembly or disassembly allows the hose guidance device and the hose reel to be used easily as per application requirements by a user. Carrying out cleaning and maintenance of the parts also becomes easy for a user.

According to an exemplary embodiment of the invention, the hose guide comprises two vertically arranged rolls and one horizontally arranged roll. The horizontally arranged roll is arranged between the two vertically arranged rolls. The two vertically arranged rolls and the horizontally arranged roll are configured to guide a hose during winding or unwinding of the hose from the hose reel. The horizontally arranged roll allows for easy retrieval of the hose even when there is downward vertical movement of the hose. Similarly, the vertically arranged rolls allow for easy retrieval of the hose even when there is sideways movement of the hose, or the hose is pulled in a horizontal direction and contacts the vertically arranged rolls. Hence, the two vertically arranged rolls together with the horizontally arranged roll allow for a low friction and more efficient unwinding respectively winding of the hose. At the same time, the two vertically arranged rolls and the horizontally arranged roll allow to efficiently and reliable guide the hose during winding or unwinding.

According to an exemplary embodiment, the hose guide may be formed with an open upper end such that the hose may simply be taken out or put in the hose guide. Hence, a gap provided between the horizontally arranged roll and the two vertically arranged rolls may in the operational position and in the storage position be limited at an upper side by the cover. Thereby, an easy and reliable guidance for the hose may be providable.

According to an alternative exemplary embodiment of the invention, the hose guide further comprises a cross strut arranged between the two vertically arranged rolls and distanced to the horizontally arranged roll. In a mounted state of the hose box assembly, the cross strut may be provided above and distanced to the horizontally arranged roll. Thereby, the hose may be inhibited from being accidentally and/or unintentionally removed from the hose guide.

According to an exemplary embodiment of the invention, the hose guidance device is rotational movable relative to the housing during a movement of the cover between the operational position and the storage position. Rotational movement allows easy retrieval of the hose reel from the hose box assembly.

According to an exemplary embodiment of the invention, the hose box assembly further comprises a water inlet. The water inlet is formed at the housing to allow connection with the hose winded on the hose reel inside the housing. The water inlet may be formed on the outside of the housing dependent on the way how the hose box assembly is connected to a water source. The water inlet is formed near an upper end of the housing. Thereby, the hose box assembly may be easily connected to a pipe line.

Before discussing the invention with the help of the drawings, the invention will be briefly discussed in general. The underground hose box has two positions. The underground hose box has a working position and a parking position (alternatively used term for the storage position). With a flat and closed cover, a user can take out at least one roll and bring the underground hose box in a working position (alternatively used term for the operational position). The cover is open in the working position. A roll, which may be fixed at the cover, may be the guide roll for the hose. Thus it is possible to take out the hose. The at least one roll can get in working position with a linear movement or with a rotating movement of the hose guidance device. When the user has finished the work, the hose is pulled in the underground hose box with the help of a spring. The user may close the cover again and get the underground box in a parking position. The cover is closed in the parking position.

One of the advantages of the underground hose box is that it enables an ease of working with a robotic lawn mower. Also, there is a closed surface of the underground hose box in the parking position. Good working performance is observed in the working position with the at least one guidance roll. The working position and parking position with the cover from the underground hose box allows getting the hose in and out of the roll with linear and rotation movements.

The underground hose box usually has two positions in which it can be used. The parking position with the cover closed, and the working position with the cover open. Further, the underground hose box has a cleaning function. The underground hose box has to be in the working position. The cover is turned up to approximately 90° and can then be removed from the hinge. The sled (alternatively used term for the hose guidance device) which is connected to the cover, and two press buttons (alternatively used term for the cover guide elements), each goes out of the sliding rail (alternatively used term for the linear guide groove) by the rotary movement of the cover. When the cover has been removed, the sled and module can be removed with a vertical movement of the underground hose box. The underground hose box, sled and the module can now be cleaned easily.

When the cleaning process is finished, the module and sled are simply put back into the underground hose box. The cover is threaded in the hinge. The cover is reconnected to the sled by pressing lightly. The push buttons are pressed back into the sliding rail by the inclined plane. Now the underground hose box can be used again as usual. Advantages include easiness in cleaning box, module and sled.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 illustrates a hose box assembly with a cover in a storage position in accordance with an exemplary embodiment of the present disclosure;
FIG. 2 illustrates a partial cut away view of the hose box assembly without the cover in accordance with an exemplary embodiment of the present disclosure;
FIG. 3 illustrates the hose box assembly with the cover in an operational position in accordance with an exemplary embodiment of the present disclosure;
FIG. 4 illustrates a partial cut away view of the hose box assembly with the cover in the operational position in accordance with an exemplary embodiment of the present disclosure;
FIG. 5 illustrates a front perspective view of the hose box assembly with the cover in the operational position in accordance with an exemplary embodiment of the present disclosure;
FIG. 6 illustrates another front perspective view of the hose box assembly with the cover in the operational position in accordance with an exemplary embodiment of the present disclosure;
FIG. 7 illustrates a partial cut away front perspective view of the hose box assembly with the cover in the operational position in accordance with an exemplary embodiment of the present disclosure;
FIG. 8 illustrates a side perspective view of the hose box assembly with the cover in a maintenance position in accordance with an exemplary embodiment of the present disclosure;
FIG. 9 illustrates a side perspective view of the hose box assembly with the cover disassembled from the housing in accordance with an exemplary embodiment of the present disclosure;
FIG. 10 illustrates a partial cut away view of the hose box assembly with the frame and the hose reel disassembled from the housing in accordance with an exemplary embodiment of the present disclosure;
FIG. 11 illustrates a partial cut away view of the hose box assembly with a rotationally mounted hose guidance device in accordance with an exemplary embodiment of the present disclosure;
FIG. 12 illustrates a partial cut away view of the hose box assembly with the cover in the storage position in accordance with an exemplary embodiment of the present disclosure; and
FIG. 13 illustrates a partial cut away view of the hose box assembly with the cover in operational position in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

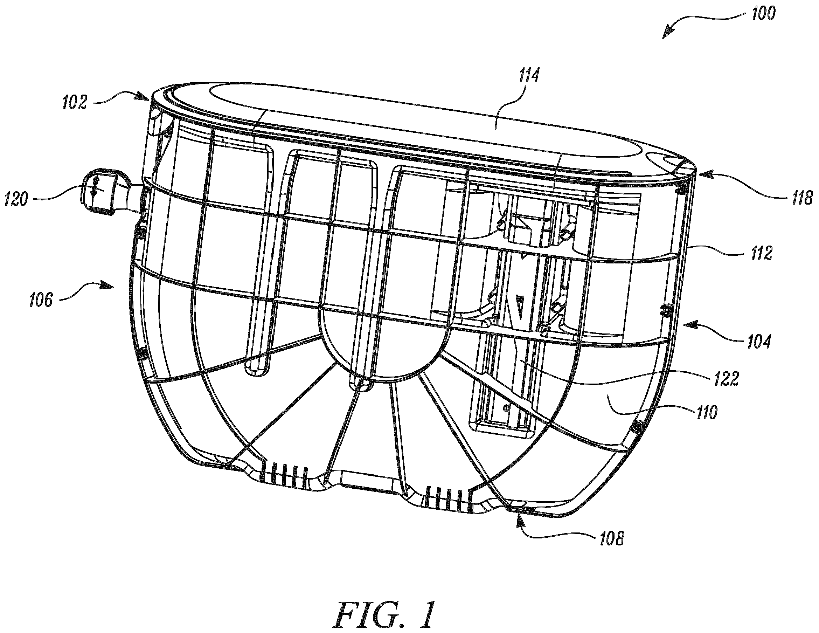

FIG. 1 illustrates a hose box assembly 100. The hose box assembly 100 has a housing 102. The housing 102 encloses various internal components of the hose box assembly 100 which will be introduced in forthcoming description. The housing 102 is an underground housing. The housing 102 is configured to be positioned in an underground location. The housing 102 has a front side 104, a rear side 106, and a bottom 108. The housing 102 further includes two opposing lateral sides. The two opposing lateral sides include a first lateral side 110 and a second lateral side 112.

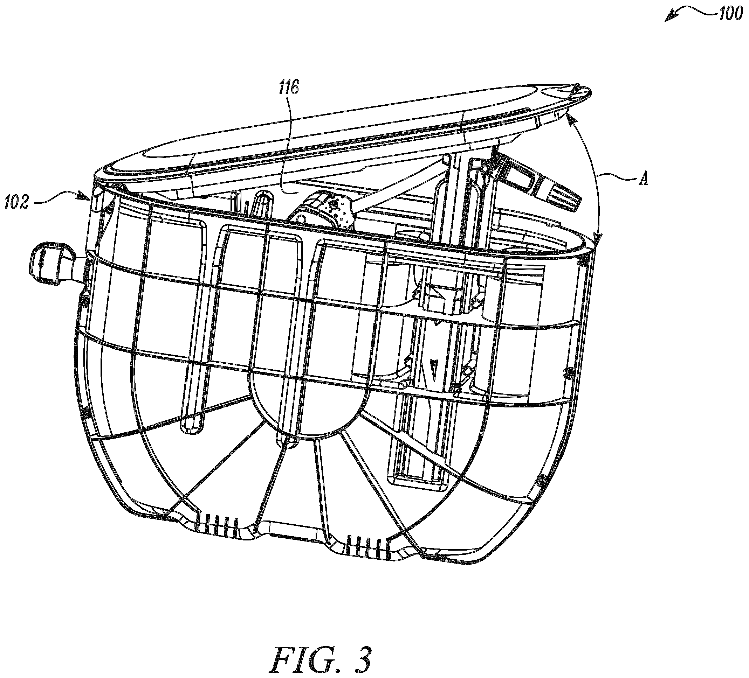

The hose box assembly 100 further includes a cover 114. The cover 114 is hinged to the housing 102. The cover 114 is rotatable between an operational position and a storage position. The cover 114 is shown in the storage position in FIG. 1. In the storage position as shown in FIG. 1, the cover 114 and an opening of the housing 102 form the angle A (shown in FIG.3) therebetween. In the storage position which is illustrated in FIG. 1, the angle A is substantially 0°.

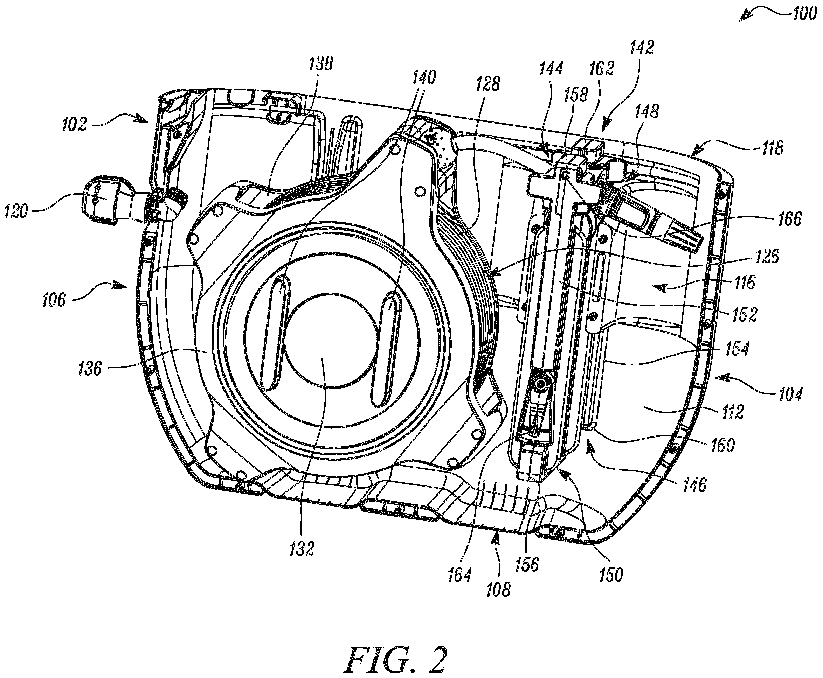

The front side 104, the rear side 106, the bottom 108, the first lateral side 110, the second lateral side 112 and the cover 114 together define an inside 116 (shown in FIG. 2) of the housing 102. The inside 116 of the housing 102 is defined as a space enclosed by the housing 102 therein. In the storage position, the cover 114 inhibits an access to the inside 116 of the housing 102. The housing 102 further defines an upper edge 118. The housing 102 comprises a water inlet 120. The water inlet 120 may be connected to a water source to supply water to the hose box assembly 100. The water inlet 120 is illustrated to be connected to the rear side 106 of the housing 102.

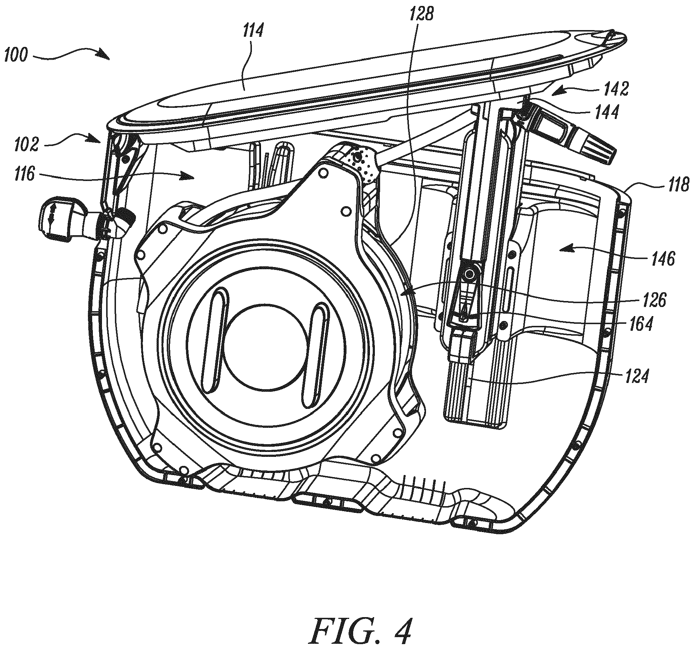

Each of the two opposing lateral sides 110, 112 define a guiding indentation 122, 124. The first lateral side 110 defines a first guiding indentation 122, and the second lateral side 112 defines a second guiding indentation 124 (shown in FIG. 4).

FIG. 2 illustrates a partial cut away view of the hose box assembly 100 showing the inside contents of the hose box assembly 100 in the storage position. The first lateral side 110 and the cover 114 is not shown. The hose box assembly 100 includes a hose reel 126. The hose reel 126 is removably mounted to the housing 102 such that a hose 128 is storable on the hose reel 126 inside the housing 102. The hose reel 126 comprises an axle (not shown) and two side walls. More specifically, the hose reel 126 includes two substantially circular shaped side walls. The two side walls include a first side wall 132 and a second side wall (not visible). The first side wall 132 and the second side wall are mounted to the axle such that the two side walls delimit a region of the hose reel 126 where the hose 128 is windable.

The hose reel 126 further includes two mounting structures 136, 138. The two mounting structures include a first mounting structure 136 and a second mounting structure 138. Each of the two mounting structures 136, 138 is fixed to one of the two side walls. The first mounting structure 136 is fixed to the first side wall 132 and the second mounting structure 138 is fixed to the second side wall. The two mounting structures help to mount the hose reel 126 to the housing 102 without the need of any tools. The hose reel 126 is mounted to the housing 102 such that a relative position between the hose reel 126 and the housing 102 is temporarily fixed. Each of the two mounting structures 136, 138 comprises two ribs 140. The two ribs 140 are arranged parallel to each other. The two ribs 140 allow the mounting of the hose reel 126 to the housing 102 in solely one predefined position and orientation. The two ribs 140 of only the first side wall 132 are visible in FIG 2.

The hose box assembly 100 further includes a hose guidance device 142. The hose guidance device 142 guides the hose 128 during winding or unwinding of the hose 128 to the hose reel 126. The hose guidance device 142 is linearly movable relative to the housing 102 during a rotational movement of the cover 114 between the operational position and the storage position. In the storage position, the hose reel 128 and the hose guidance device 142 are positioned inside the housing 102.

The hose guidance device 142 includes a hose guide 144 and a frame 146. The frame 146 has an upper end 148 and a lower end 150. The upper end 148 is positioned close to the cover 114, and the lower end 150 is positioned close to the bottom 108 of the housing 102, when the hose guidance device 142 is positioned in the housing 102. The hose guide 144 is mounted to the frame 146 at the upper end 148 of the frame 146. More specifically, the hose guide 144 is rotatably mounted to the frame 146 at the upper end 148 of the frame 146.

The frame 146 has two lateral sides 152, 154. The two lateral sides include a first lateral side 152 and a second lateral side 154. The first lateral side 152 has a lower end 156 and an upper end 158. Similarly, the second lateral side 154 has a lower end 160 and an upper end 162. At each of the two lateral sides 152, 154 of the frame 146, a housing guide element is mounted. A first housing guide element 164 is mounted on the first lateral side 152 of the frame 146. In an embodiment, the first housing guide element 164 is a spring-loaded housing guide pin 164. Further, a second housing guide element (not visible in FIG. "2) is mounted on the second lateral side 154 of the frame 146. In an embodiment, the second housing guide element is a spring-loaded housing guide pin. The first housing guide pin 164 is mounted near the lower end 156 of the first lateral side 152 of the frame 146. Further, the second housing guide pin is mounted near the lower end 160 of the second lateral side 154 of the frame 146.

Each of the two housing guide pins is guidably movable in a respective one of the guiding indentations. More specifically, the first housing guide pin 164 is guidably movable in the first guiding indentation 122 and the second housing guide pin is guidably movable in the second guiding indentation 124. Each of the guiding indentation is formed such that, in the storage position, the housing guide pin is positionable such that the hose guidance device 142 is positioned inside the housing 102. More specifically, the first guiding indentation 122 is formed such as the first housing guide pin 164 is positionable such that the hose guide 144 is positioned inside the housing 102 in the storage position. Further, the second guiding indentation 124 is formed such as the second housing guide pin is positionable such that the hose guide 144 is positioned inside the housing 102 in the storage position.

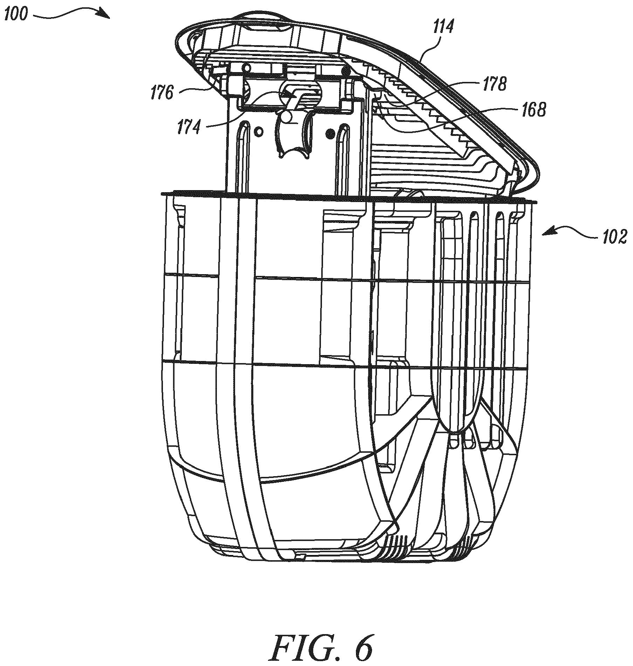

The frame 146 further comprises two cover guide elements 166, 168, wherein each of the two cover guide elements 166,168 is fixed to the frame 146 at one of the two lateral sides 152, 154 adjacent to the upper end 148. Each of the two cover guide elements 166, 168 is formed as a cover spring pin 166, 168. The two cover spring elements 166, 168 include a first cover spring element 166 and a second cover spring element 168 (shown in FIG. 6). The first cover spring element 166 is fixed to the frame 146 at the first lateral side 152. The first cover spring pin 166 is fixed to the frame 146 at the first lateral side 152 adjacent to the upper end 158 of the first lateral side 152. Similarly, the second cover spring pin 168 is fixed to the frame 146 at the second lateral side 154. The second cover spring element 168 is fixed to the frame 146 at the second lateral side 154 adjacent to the upper end 162 of the second lateral side 154.

FIG. 3 illustrates the hose box assembly 100 with the cover 114 in the operational position. In the operational position, the inside 116 of the housing 102 is accessible. In the operational position, the cover 114 and the opening of the housing 102 form the angle A therebetween. As illustrated in FIG. 3, the cover 114 and the opening of the housing 102 form an angle A of substantially 18° therebetween.

FIG. 4 illustrates a partial cut away view of the hose box assembly 100 showing the inside contents of the hose box assembly 100 in the operational position. The frame 146 is movably mounted to the housing 102 such that the hose guidance device 142 is movable relative to the housing 102 during a movement of the cover 114 between the operational position and the storage position. The frame 146 is coupled to the cover 114 such that when the cover 114 is in the operational position, the hose guide 144 is positioned above the upper edge 118 of the housing 102 such that the hose guide 144 is accessible. In the operational position, the hose reel 126 is positioned in the inside 116 of the housing 102.

Each of the guiding indentation 122, 124 is formed such that, in the operational position, the respective housing guide element 164 respectively spring-loaded housing guide pin 164, is adjustable respectively lockable such that the hose guide 144 is positioned above the upper edge 118 of the housing. More specifically, the first guiding indentation 122 is formed such as the first housing guide element 164 is adjustable such that the hose guide 144 is positioned above the upper edge 118 of the housing 102 in the operational position. Further, the second guiding indentation 124 is formed such as the second housing guide element is adjustable such that the hose guide 144 is positioned above the upper edge 118 of the housing 102 in the operational position.

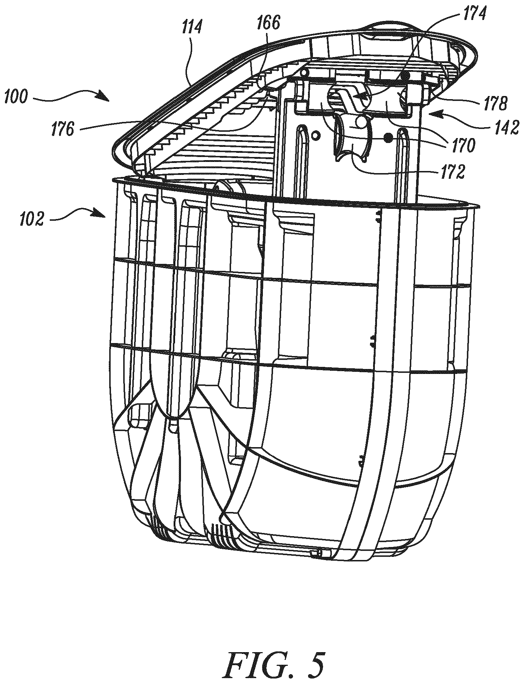

FIG. 5 shows a front perspective view of the hose box assembly 100 with the cover 114 in the operational position. The hose guide 144 includes two vertically arranged rolls 170 and one horizontally arranged roll 172. The horizontally arranged roll 172 is arranged between the two vertically arranged rolls 170. The two vertically arranged rolls 170 and the horizontally arranged roll 172 guide the hose 128 during winding or unwinding of the hose 128 from the hose reel 126. The two vertically arranged rolls 170 and the horizontally arranged roll 172 define a gap 174 therein through which the hose 128 can be pulled and by which gap 174 the hose 128 is guided during winding or unwinding of the hose 128.

The cover 114 further comprises two guide grooves 176, 178, particularly two linear guide grooves 176, 178, which are configured such that each of the two cover guide elements 166, 168 is movable in a respective one of the two guide grooves 176, 178 when the cover 114 is rotationally moved between the operational position and the storage position such that the hose guidance device 142 is linearly movable relative to the housing 102. Two guide grooves 176, 178 include a first guide groove 176 and a second guide groove 178. Further, the two cover guide elements 166, 168 illustrated in FIG. 5 are formed as two cover guide spring pins 166, 168. The first cover guide element 166 is movable in the first guide groove 176 when the cover 114 is rotationally moved between the operational position and the storage position such that the hose guidance device 142 is linearly movable relative to the housing 102.

FIG. 6 shows another front perspective view of the hose box assembly 100 with the cover 114 in the operational position. The second cover guide element 168 is movable in the second guide groove 178 when the cover 114 is rotationally moved between the operational position and the storage position such that the hose guidance device 142 is linearly movable relative to the housing 102.

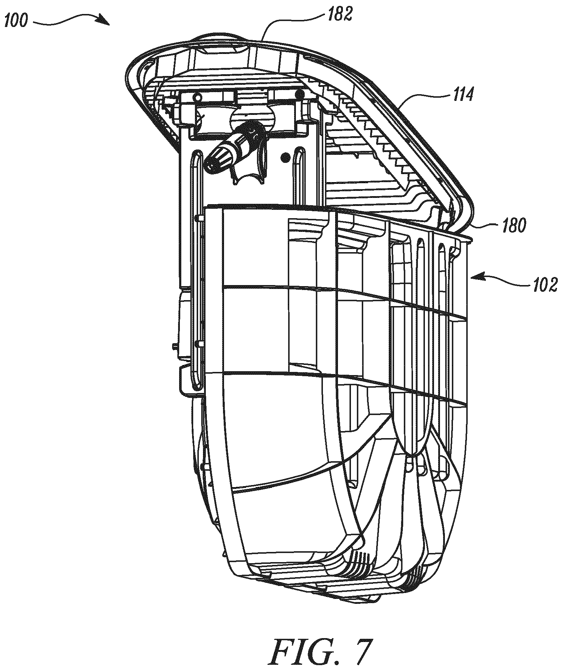

FIG. 7 shows a partial cut away front perspective view of the hose box assembly 100 with the cover 114 in the operational position. The cover 114 defines a rear edge 180 and a front edge 182 opposite to the rear edge 180. Each of the guide grooves 176, 178 extends from the front edge 182 of the cover 114 towards the rear edge 180 of the cover 114. Each of the guide grooves 176, 178 comprises a front end positioned adjacent to the front edge 182 of the cover 114.

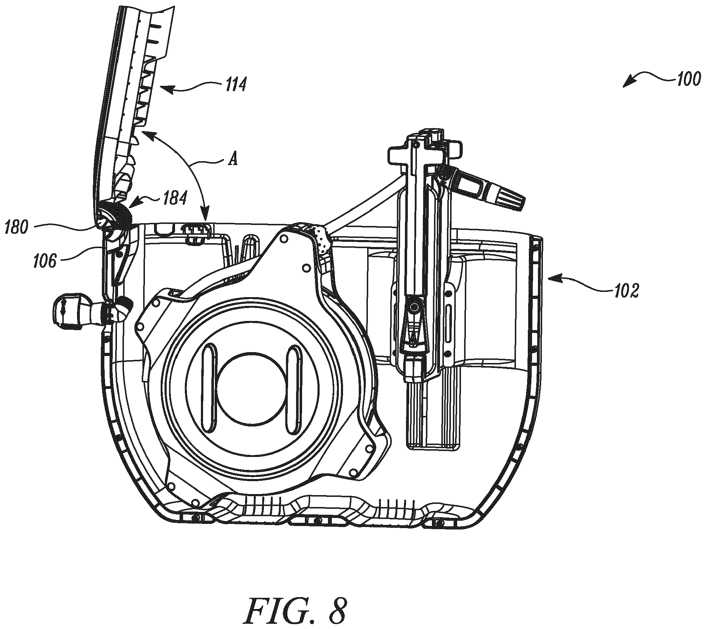

FIG. 8 shows the cover 114 in a maintenance position. The cover 114 is configured to rotate about a hinge 184 from the operational position to the maintenance position. In the maintenance position, the cover 114 and the opening of the housing 102 form the angle A of substantially 90° therebetween.

In the maintenance position, the cover 114 is further configured to be disassembled from the housing 102. More specifically, in the maintenance position, the cover 114 is configured to be toollessly disassembled from the housing 102.

The cover 114 is removably hingeable to the housing 102 by the hinge 184. The hinge 184 is formed at the rear side 106 of the housing 102 and at the rear edge 180 of the cover 114. The front end of the guide groove 176, 178 is formed such that, when the cover 114 is rotated from the operational position towards the maintenance position, the cover guide element 166, 168, particularly automatically, disengages from the guide groove 176, 178. Further, the front end of the guide groove 176, 178 is further formed such that, when the cover 114 is rotated into the storage position, the cover guide element 166, 168, particularly automatically, engages with the guide groove 176, 178.

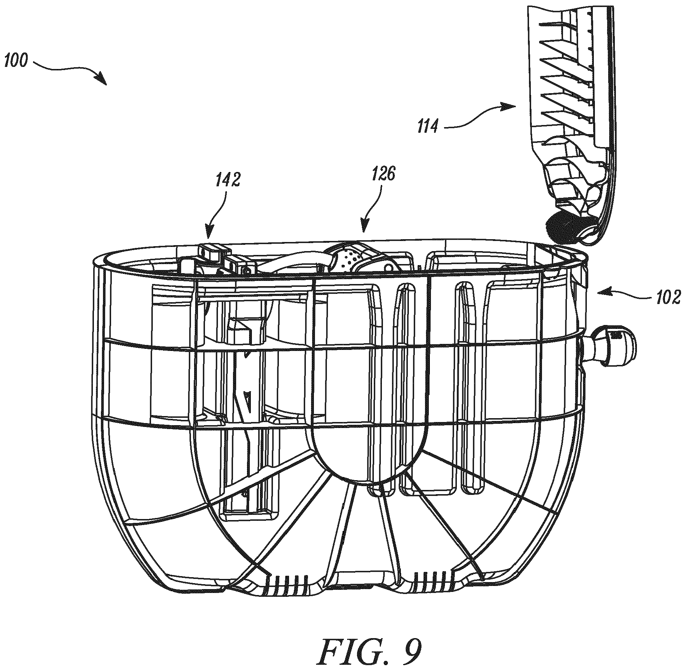

FIG. 9 shows the cover 114 disassembled from the housing 102. After the cover 114 is disassembled from the housing 102, other parts of the hose box assembly 100 may also be taken out for cleaning and maintenance purposes. The hose guidance device 142 is further configured to be disassembled from the housing 102 in the maintenance position, in particular by a linear movement relative to the housing 102. More specifically, the hose guidance device 142 is toollessly disassembled from the housing 102 in the maintenance position by the linear movement relative to the housing 102.

Further, the hose reel 126 is configured to be disassembled from the housing 102 in the maintenance position, in particular by a linear movement relative to the housing 102. More specifically, the hose reel 126 is toollessly disassembled from the housing 102 in the maintenance position by the linear movement relative to the housing 102.

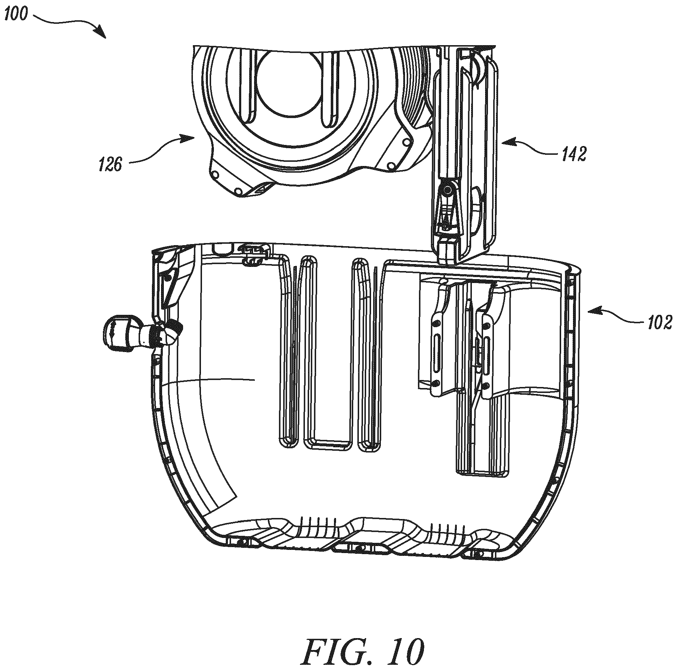

FIG. 10 shows the hose reel 126 and the hose guidance device 142 outside of the housing 102 in a disassembled state.

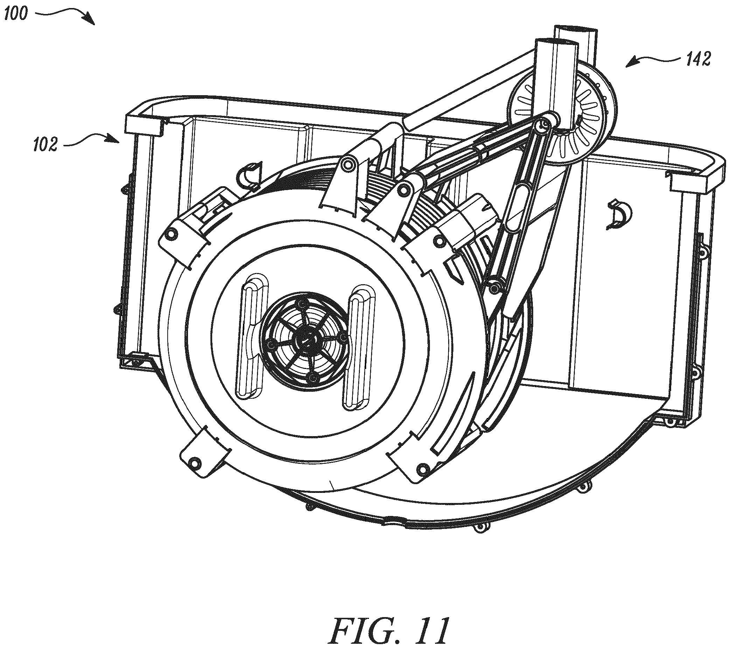

FIG. 11 shows yet another embodiment of the hose box assembly 100. The hose guidance device 142 is rotationally movable relative to the housing 102 during a movement of the cover 114 between the operational position and the storage position. The hose guidance device 142 moves in a rotational motion and the user may retrieve the hose 128 accordingly.

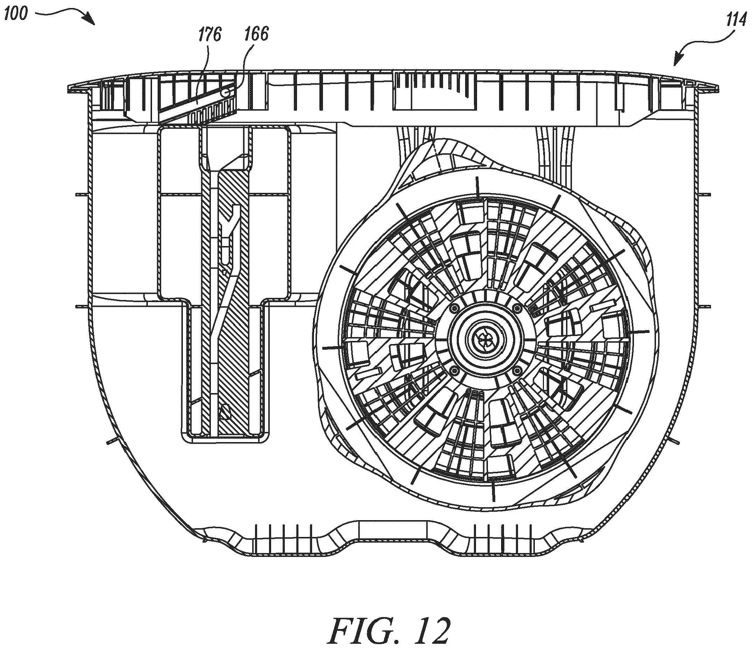

FIG. 12 shows a partial cut away view of the hose box assembly 100 with the cover 114 in the storage position respectively in a closed position. The cover 114 comprises the first guide groove 176. The first cover guide element 166 is shown inside the first guide groove 176 when the cover 114 is in the storage position at its back end. The back end of the first guide groove 176 is shown on the right end of the first guide groove 176 in FIG: 12. The first guide groove 176 extends slightly angularly across the cover 114. In other words, an length extension of the first guide groove 176 is formed angled relative to a surface of the cover 114. The first guide groove 176 is configured such that the first cover guide element 166 is movable along the first guide groove 176 during a rotational movement of the cover 114 between the storage position and the operational position respectively between a closed position and an open position of the cover 114.

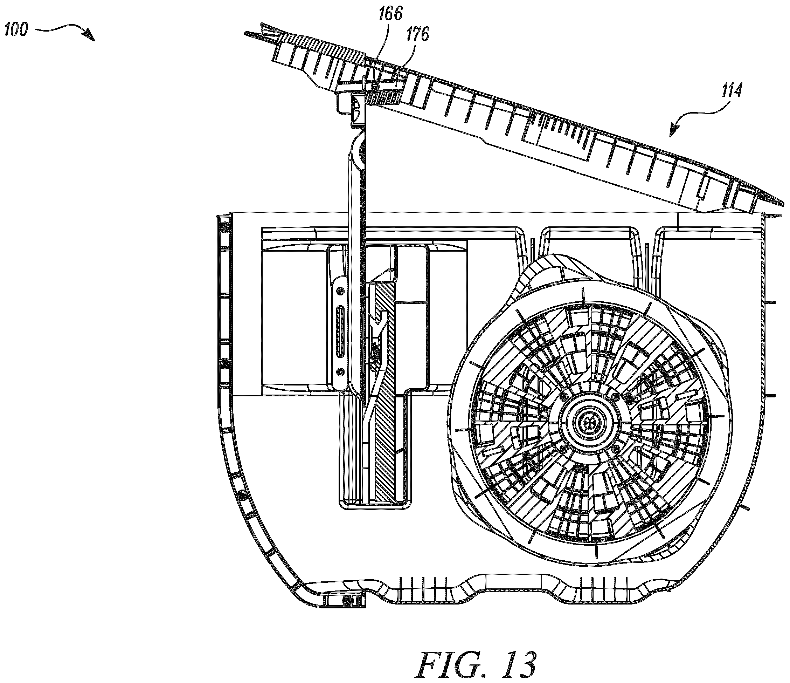

FIG. 13 shows a partial cut away view of the hose box assembly 100 with the cover 114 in the operational position. The cover 114 shows the first guide groove 176. The first cover guide element 166 is shown inside the first guide groove 176 when the cover 114 is in the operational position. As the cover 114 has been rotated into the operational position, the first cover guide element 166 has travelled along the first guide groove 176. Similarly, the second cover guide element 168 travels along the second guide groove 178.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Hose box assembly
- 102: Housing
- 104: Front side
- 106: Rear Side
- 108: Bottom
- 110: First lateral side
- 112: Second lateral side
- 114: Cover
- 116: Inside of the housing
- 118: Upper edge
- 120: Water inlet
- 122: First guiding indentation
- 124: Second guiding indentation
- 126: Hose reel
- 128: Hose
- 132: First side wall
- 136: First mounting structure
- 138: Second mounting structure
- 140: Ribs
- 142: Hose guidance device
- 144: Hose guide
- 146: Frame
- 148: Upper end
- 150: Lower end
- 152: First lateral side
- 154: Second lateral side
- 156: Lower end of the first lateral side
- 158: Upper end of the first lateral side
- 160: Lower end of the second lateral side
- 162: Upper end of the second lateral side
- 164: First housing guide element
- 166: First cover guide element
- 168: Second cover guide element
- 170: Vertically arranged rolls
- 172: Horizontally arranged roll
- 174: Gap
- 176: First guide groove
- 178: Second guide groove
- 180: Rear edge
- 182: Front edge
- 184: Hinge
- A: Angle

## Claims

1. A hose box assembly (100) comprising:
a housing (102),
a hose reel (126) removably mounted to the housing (102) such that a hose (128) is storable on the hose reel (126) inside the housing (102),
a cover (114) hinged to the housing (102),
a hose guidance device (142) configured to guide the hose (128) during winding or unwinding of the hose (128) to the hose reel (126),
wherein the hose guidance device (142) comprises a hose guide (144) and a frame (146),
wherein the cover (114) is configured to be rotatable between an operational position and a storage position,
wherein in the storage position, the hose reel (126) and the hose guidance device (142) are positioned inside the housing (102), and the cover (114) inhibits an access to an inside of the housing (102),
wherein in the operational position, the inside (116) of the housing (102) is accessible,
**characterized in that:**
wherein the frame (146) is movably mounted to the housing (102) such that the hose guidance device (142) is movable relative to the housing (102) during a movement of the cover (114) between the operational position and the storage position,
wherein the frame (146) is coupled to the cover (114) such that when the cover (114) is in the operational position, the hose guide (144) is positioned above an upper edge (118) of the housing (102) such that the hose guide (144) is accessible, and
wherein, in the storage position and in the operational position, the hose reel (126) is positioned in the inside (116) of the housing (102).

2. The hose box assembly (100) according to claim 1,
wherein the housing (102) is an underground housing, and/or
wherein the housing (102) is configured to be positioned in an underground.

3. The hose box assembly (100) according to claim 1 or 2,
wherein the hose guidance device (142) is configured to be linearly movable relative to the housing (102) during a rotational movement of the cover (114) between the operational position and the storage position.

4. The hose box assembly (100) according to any one of the preceding claims,
wherein the frame (146) comprises an upper end (148) being positioned close to the cover (114) and a lower end (150) being positioned close to a bottom (108) of the housing (102), and
wherein the hose guide (144) is mounted, in particular rotatably mounted, to the frame (146) at the upper end (148) of the frame (146).

5. The hose box assembly (100) according to any one of the preceding claims,
wherein the housing (102) comprises two opposing lateral sides, a front side (104), a rear side (106) and a bottom (108),
wherein each of the two opposing lateral sides (110, 112) comprises a guiding indentation (122, 124),
wherein the frame (146) comprises two lateral sides (152, 154),
wherein at each of the two lateral sides (152, 154) of the frame (146) a housing guide element (164), in particular a housing guide pin (164),more in particular a spring-loaded housing guide pin (164), is provided, wherein each of the housing guide elements (164) is guidably movable in a respective one of the guiding indentations (122, 124),
wherein the guiding indentation (122, 124) is formed such that, in the operational position, the housing guide element (164) is adjustable such that the hose guide (144) is positioned above an upper edge (118) of the housing (102), and wherein the guiding indentation (122, 124) is further formed such that, in the storage position, the housing guide element (164) is positionable such that the hose guidance device (142), particularly the hose guide (144), is positioned inside the housing (102).

6. The hose box assembly (100) according to claim 5,
wherein the frame (146) comprises an upper end (148) positioned close to the cover (114) and a lower end (150) positioned close to a bottom (108) of the housing (102), and
wherein the housing guide elements (164) are each mounted near the lower end (150) of the lateral sides (152, 154).

7. The hose box assembly (100) according to any one of the preceding claims,
wherein the frame (146) comprises an upper end (148) positioned close to the cover (114), a lower end (150) positioned close to the bottom (108) of the housing (102), and two lateral sides (152, 154),
wherein the frame (146) further comprises two cover guide elements (166,168), wherein each of the two cover guide elements (166, 168) is provided at the frame (146) at one of the two lateral sides (152, 154) adjacent to the upper end (148), and
wherein the cover (114) comprises two guide grooves (176, 178), particularly two linear guide grooves (176, 178), which are configured such that each of the two cover guide elements (166, 168) is movable in one of the two guide grooves (176, 178) when the cover (114) is rotationally moved between the operational position and the storage position such that the hose guidance device (142) is linearly movable relative to the housing (102).

8. The hose box assembly (100) according to claim 7,
wherein the cover (114) is removably hingeable to the housing (102) by a hinge (184),
wherein the hinge (184) is formed at a rear side (106) of the housing (102) and at a rear edge (180) of the cover (114),
wherein the cover (114) further comprises a front edge (182) opposite to the rear edge (180),
wherein each of the guide grooves (176, 178) extends from the front edge (182) of the cover (114) towards the rear edge (180) of the cover (114),
wherein each of the guide grooves (176, 178) comprises a front end positioned adjacent to the front edge (182) of the cover (114),
wherein the cover (114) is further configured to be disassembled, particularly toollessly disassembled, from the housing (102), in a maintenance position, wherein the front end of the guide groove (167, 178) is formed such that, when the cover (114) is rotated from the operational position towards the maintenance position, the cover guide element (166, 168), particularly automatically, disengages from the guide groove (176, 178), and/or
wherein the front end of the guide groove (176, 178) is further formed such that, when the cover (114) is rotated into the storage position, the cover guide element (166, 168), particularly automatically, engages with the guide groove (176, 178).

9. The hose box assembly (100) according to any one of the preceding claims,
wherein in the operational position, the cover (114) and an opening of the housing (102) form an angle (A) of about 10° to 45°, in particular 15° to 30°, more in particular substantially 18°, therebetween.

10. The hose box assembly (100) according to any one of the preceding claims,
wherein in the storage position, the cover (114) and an opening of the housing (102) form an angle (A) of about 5° to 0°, in particular 3° to 0°, more in particular substantially 0°, therebetween.

11. The hose box assembly (100) according to any one of the preceding claims,
wherein the hose reel (126) comprises an axle, two side walls, particularly two substantially circular shaped side walls, and two mounting structures,
wherein the two side walls are mounted to the axle such that the two side walls delimit a region of the hose reel (126) where the hose (128) is windable, wherein each of the two mounting structures is fixed to one of the two side walls, wherein the two mounting structures are configured to toollessly mount the hose reel (126) to the housing (102) such that a relative position between the hose reel (126) and the housing (102) is temporarily fixed,
in particular wherein each of the two mounting structures comprises two ribs, particularly two parallel ribs, which are configured to allow the mounting of the hose reel (126) to the housing (102) in solely one predefined position and orientation.

12. The hose box assembly (100) according to any one of the preceding claims,
wherein the cover (114) is further configured to be rotatable in a maintenance position, wherein the cover (114) is further configured to be disassembled, particularly toollessly disassembled, from the housing (102), in the maintenance position, and/or
wherein, in the maintenance position, the cover (114) and an opening of the housing (102) form an angle (A) of about 60° to 100°, in particular 75° to 95°, more in particular substantially 90°, therebetween.

13. The hose box assembly (100) according to claim 12,
wherein the hose guidance device (142) is further configured to be disassembled, particularly toollessly disassembled, from the housing (102) in the maintenance position, in particular by a linear movement relative to the housing (102), and/or wherein the hose reel (126) is configured to be disassembled, in particular toollessly disassembled, from the housing (102) in the maintenance position, particularly by a linear movement relative to the housing (102).

14. The hose box assembly (100) according to any one of the preceding claims,
wherein the hose guide (144) comprises two vertically arranged rolls (170) and one horizontally arranged roll (172),
wherein the horizontally arranged roll (172) is arranged between the two vertically arranged rolls (170), and
wherein the two vertically arranged rolls (170) and the horizontally arranged roll (172) are configured to guide a hose (128) during winding or unwinding of the hose (128) from the hose reel (126).

15. The hose box assembly (100) according to claim 1 or 2,
wherein the hose guidance device (142) is rotationally movable relative to the housing (102) during a movement of the cover (114) between the operational position and the storage position.
